Europäisches Patentamt

European Patent Office

Office européen des brevets

(19)

(11) Veröffentlichungsnummer: **0 082 313**

A1

(12) **EUROPÄISCHE PATENTANMELDUNG**

(21) Anmeldenummer: 82110686.1

(22) Anmeldetag: 19.11.82

(51) Int. Cl.³: **A 01 F 25/20**

(30) Priorität: 20.11.81 DE 3145957
    14.12.81 DE 3149514
    21.01.82 DE 3201675

(43) Veröffentlichungstag der Anmeldung:
    29.06.83 Patentblatt 83/26

(84) Benannte Vertragsstaaten:
    AT BE FR IT NL

(71) Anmelder: B. Strautmann & Söhne GmbH & Co.
    Bielefelder Strasse
    D-4518 Bad Laer 1(DE)

(72) Erfinder: Strautmann, Heinrich
    Bielefelder Strasse 41
    D-4518 Bad Laer(DE)

(74) Vertreter: Stracke, Alexander, Dipl.-Ing. et al,
    Patentanwälte Dipl.-Ing. Loesenbeck Dipl.-Ing. Stracke
    Jöllenbecker Strasse 164 Postfach 5605
    D-4800 Bielefeld 1(DE)

(54) Vorrichtung zur Entnahme von Corn-Cobmix aus einem Flachsilo.

(57) Die Vorrichtung zur Entnahme von Corn-Cobmix aus einem Flachsilo (14) ist wie folgt aufgebaut.

An einem Schlepper (1) mit einem bekannten Frontlader (2) nebst Frontschaufel (3) ist eine schwenkbar angeordnete Fräswalze (12) montiert.

Die Fräswalze (12) ist aus dem Arbeitsbereich der Frontschaufel (3) wegschwenkbar und neben ihrem Antriebsaggregat und ihrem Traggestell (5) demontierbar am Frontlader (2) angeschlossen.

Diese Konstruktion ist eine Vorrichtung zur Entnahme von Corn-Cobmix aus einem Flachsilo, die weitgehend auf bei einem Landwirt ohnehin vorhandene Gerätschaften zurückgreift und nur wenige und kostengünstige Zusatzteile benötigt.

Fig 1

EP 0 082 313 A1

6/12

B. Strautmann & Söhne GmbH & Co., Bielefelder Straße,
4518 Bad Laer 1

Vorrichtung zur Entnahme von Corn-Cobmix
aus einem Flachsilo

Die vorliegende Erfindung betrifft eine Vorrichtung zur Entnahme
von Corn-Cobmix aus einem Flachsilo, bestehend aus einer um eine
horizontale Achse schwenkbaren Fräswalze und einem Aufnahmebehälter.

Vorrichtungen der gattungsgemäßen Art sind an sich bekannt. Die bekannten Vorrichtungen stellen in sich funktionsfähige Einheiten dar,
d.h., die bekannten Vorrichtungen sind fahrbare Geräte mit Fräswalze
und Aufnahmebehälter. Die Vorrichtungen dieser Art sind aufgrund
ihrer Konzeption recht aufwendige Maschinen und somit letztendlich
auch teuer.

Der vorliegenden Erfindung liegt die Aufgabe zugrunde, eine Vorrichtung der gattungsgemäßen Art so zu gestalten, daß weitgehend auf
bei einem Landwirt vorhandene Gerätschaften zurückgegriffen werden
kann, so daß nur wenige und konstengünstige Zusatzteile benötigt
werden.

Eine erfindungsgemäße Vorrichtung ist gekennzeichnet durch folgende
Merkmale:

a) die Vorrichtung besteht aus einem Schlepper mit einem bekannten Frontlader mit Frontschaufel und der am Frontlader schwenkbar angeordneten Fräswalze,

b) die Fräswalze ist aus dem Arbeitsbereich der Frontschaufel wegschwenkbar,

c) die Fräswalze ist nebst ihrem Antriebsaggregat und ihrem Traggestell demontierbar am Frontlader angeschlossen.

Es kann davon ausgegangen werden, daß ein Schlepper mit Frontlader und Frontschaufel im allgemeinen in einem landwirtschaftlichen Betrieb vorhanden ist. An einen derartigen Frontlader braucht nunmehr eine Fräswalze mit Traggestell und Antriebsaggregat angebaut zu werden, um Corn-Cobmix aus einem Flachsilo zu entnehmen. Mit der Fräswalze wird in bekannter Art und Weise eine Futterschicht vom Flachsilo abgefräst und kann von der Frontschaufel des Frontladers aufgenommen werden. Um das Aufnehmen der Futterschicht in die Frontschaufel zu vereinfachen, ist das Traggestell der Fräswalze so gestaltet, daß die Fräswalze aus dem Arbeitsbereich der Frontschaufel weggeschwenkt werden kann. Dies bringt außerdem den Vorteil mit sich, daß in vielen Fällen der Frontlader mit Frontschaufel für andere Arbeiten verwendet werden kann, ohne daß dafür die Frästwalze nebst Traggestell demontiert werden muß.

Ein besonders vorteilhaftes Ausführungsbeispiel der Erfindung besteht darin, daß am Traggestell der Fräswalze ein in Richtung der Frontschaufel bewegbarer Füllschieber angeordnet ist.

Durch diesen Füllschieber wird das Einfüllen des abgefrästen Silagegutes in die Frontschaufel des Frontladers erheblich vereinfacht.

Es ist nicht mehr erforderlich, den ganzen Schlepper und damit auch den Frontlader nebst Frontschaufel in Bewegung zu setzen, um das abgefräste Silagegut aufzunehmen, sondern es wird lediglich durch Betätigung des Füllschiebers das abgefräste Silagegut in die stillstehende Frontschaufel hineingeschoben. Dies ist insbesondere dann von Vorteil, wenn der Untergrund, auf dem die Schaufel aufliegt, sehr weich ist und keine einwandfreie Abstützung für die Frontschaufel bietet.

Weitere Merkmale der Erfindung sind Gegenstand weiterer Unteransprüche.

In den beigefügten Zeichnungen sind Ausführungsbeispiele der Erfindung dargestellt, die im nachfolgenden näher beschrieben werden. Es zeigen:

Fig. 1    eine schematisch dargestellte Seitenansicht eines Schleppers mit Frontlader nebst Frontschaufel und Fräswalze,

Fig. 2    eine der Fig. 1 entsprechende Seitenansicht nach einem weiteren Ausführungsbeispiel der Erfindung,

Fig. 3    eine schematisch dargestellte Seitenansicht einer Vorrichtung zur Entnahme von Corn-Cobmix aus einem Flachsilo nach einem weiteren Ausführungsbeispiel der Erfindung,

Fig. 4    eine weitere Seitenansicht der Vorrichtung nach Fig. 3 in einer anderen Arbeitsstellung,

Fig. 5    eine Seitenansicht der wesentlichsten Bauteile einer Vorrichtung nach einem weiteren Ausführungsbeispiel der Erfindung,

Fig. 6    einen Teilschnitt nach der Linie VI-VI in Fig. 5,

Fig. 7    eine schematisch dargestellte Seitenansicht eines Schleppers mit Frontlader mit Frontschaufel und Fräs-walze,

Fig. 8    eine Draufsicht auf die Vorrichtung gemäße Fig. 7,

Fig. 9    eine schematische Seitenansicht der wesentlichsten Bauteile einer Vorrichtung nach einem weiteren Ausführungsbeispiel der Erfindung,

Fig. 10   eine Draufsicht auf Fig. 9, gezeigt mit dem Antrieb der
Fräswalze.

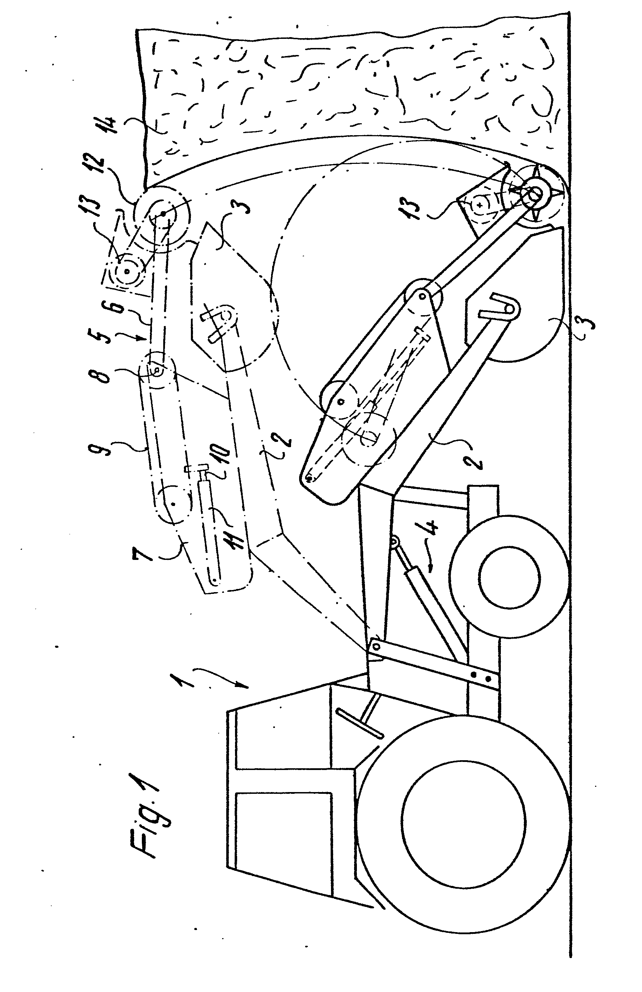

In Fig. 1 ist mit dem Bezugszeichen 1 ein Schlepper bezeichnet, an
an den ein Frontlader 2 mit einer Frontschaufel 3 angebaut ist. Der
Frontlader 2 ist über Hydraulikzylinder 4 in die aus Fig. 1 ersichtlichen beiden Endstellungen auf- und abschwenkbar.

Am Frontlader 2 ist ein mehrteiliges Traggestellt 5 demontierbar angeschlossen, welches aus zwei Tragarmen 6 und zwei Tragplatten 7 besteht, wobei die Tragplatten 7 den gleichen Abstand zueinander aufweisen wie die Holme des Frontladers 2 und an diesem demontierbar,
aber starr angeschlossen sind. Die Tragarme 6 sind um eine Achse 8
schwenkbar an den Tragplatten 7 angeschlossen. Über einen Kettentrieb 9, an dessen Untertrum die Kolbenstange 10 eines Druckmedienzylinders 11 angeschlossen ist, kann die Achse 8 mit den daran angeschlossenen Tragarmen 6 gedreht werden. Eine Drehung der Achse 8
bewirkt ein Verschwenken der Tragarme 6 zur Frontschaufel 3 hin oder
von der Frontschaufel 3 weg.

Am freien Ende der Tragarme 6 ist eine Fräswalze 12 gelagert, die
über einen Hydromotor 13 antreibbar ist.

Das Traggestell 5 ist mit dem Frontlader 2 gemeinsam auf- und abschwenkbar und in Arbeitsstellung befindet sich die Fräswalze in
unmittelbarer Nachbarschaft der Frontschaufel 3 des Frontladers 2.
Diese Lage ist im oberen Teil der Fig. 1 dargestellt. Durch Absenken des Frontladers 2 unter gleichzeitiger Einschaltung des Hydromotors 13 wird aus einem Flachsilo 14 eine Futterschicht abgefräst. Befindet sich die Frontschaufel 3 des Frontladers 2 in ihrer
unteren Endstellung, so trifft dies ebenfalls für die Fräswalze 12
zu. Zur Aufnahme des abgefrästen Silagefutters wird zunächst die
Fräswalze 12 aus dem Arbeitsbereich der Frontschaufel 3 weggeschwenkt. Dies erfolgt durch Betätigung des Druckmedienzylinders 11, der über seine Kolbenstange 10 den Kettentrieb 9 betätigt und die Tragarme 6 des Traggestelles 5 nebst der Fräswalze 12 in den Bereich der Tragplatten 7 des Traggestelltes 5 zurückschwenkt. Nunmehr ist die Frontschaufel völlig frei und das abgefräste Silagefutter kann in bekannter Weise von der Frontschaufel 3 aufgenommen und an seinen Bestimmungsort gebracht werden.

Beim Ausführungsbeispiel gemäß Fig. 1 wird die Schwenkbewegung des Frontladers ausgenutzt, um die Fräswalze 12 von oben nach unten zu verfahren, um auf diese Weise eine Futterschicht aus dem Flachsilo 14 abzufräsen.

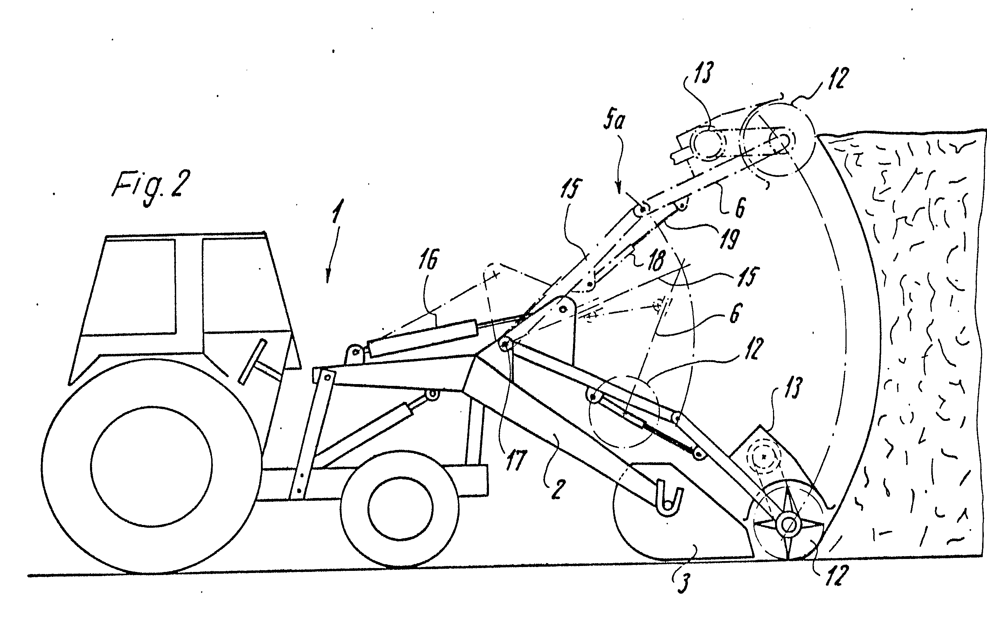

Beim Ausführungsbeispiel nach Fig. 2 kann das Traggestell 5a unabhängig vom Frontlader 2 auf- und abgeschwenkt werden. Das Traggestell 5 a gemäß dem Ausführungsbeispiel nach Fig. 2 besteht wiederum aus den Tragrahmen 6, an deren vorderen Enden die Fräswalze 12 und der Hydromotor 13 angeordnet sind und aus zwei Schwenkarmen 15, die gelenkig am Frontlader 2 angeschlossen sind.

Die Schwenkarme 15 sind über Druckmittelzylinder 16 um eine horizontale Schwenkachse 17 auf- und abschwenkbar.

Wie aus Fig. 2 sehr deutlich hervorgeht, sind die Schwenkarme 15 und die Tragarme 6 gelenkig miteinander verbunden. Weiterhin ist an den Tragarmen 15 jeweils ein Zylinder 18 befestigt, deren Kolbenstangen 19 an den Tragarmen 6 angreifen. Im ausgefahrenen Zustand der Kolbenstangen 19 nehmen die Tragarme 6 und die Schwenkarme 15 eine nahezu gestreckte Lage ein, in dieser Lage ist das gesamte Traggestell 5a über den Druckmittelzylinder 16 aus einer oberen Endstellung in eine untere Endstellung verschwenkbar, wobei dann die Fräswalze 12 unmittelbar vor die Frontschaufel 3 des Frontladers 2 zu liegen kommt. Die beiden besagten Endstellungen des Traggestelles 5 sind in Fig. 2 dargestellt. Beim Ausführungsbeispiel der Erfindung nach Fig. 2 wird die Fräswalze 12 durch Betätigung der Zylinder 18 aus dem Arbeitsbereich der Frontschaufel 3 weggeschwenkt, wobei die Fräswalze 12 wie beim Ausführungsbeispiel in Fig. 1 oberhalb der Frontschaufel 3 liegt.

Auch die weggeschwenkte Stellung der Fräswalze 12 ist in Fig. 2 andeutungsweise dargestellt.

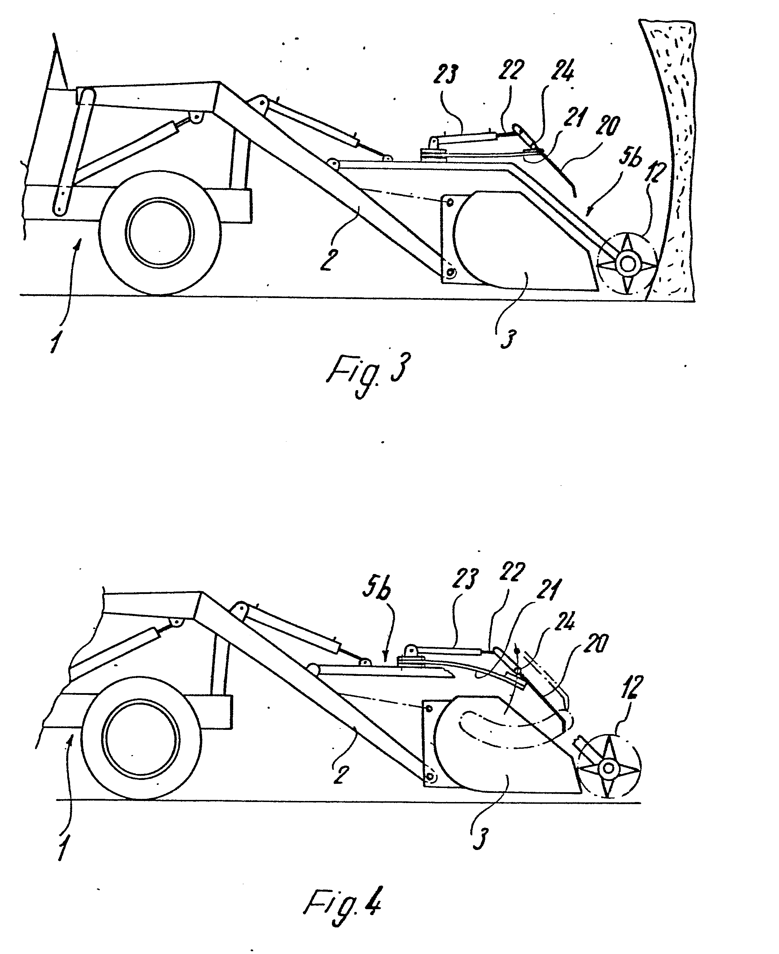

Die Fig. 3 und 4 zeigen ein Ausführungsbeispiel der Erfindung, bei
der am Traggestell 5b ein Füllschieber 20 angeordnet ist, der in
Richtung der Frontschaufel 3 verschwenkbar ist. Der Füllschieber 20
ist gelenkig an zwei Blattfedern 21 angeschlossen, die ihrerseits
fest am Traggestell 5b angeschlossen sind. Durch das Ausfahren der
Kolbenstange 22 eines Hydraulikzylinders 23 wird der Füllschieber
20 um seine Gelenkachse 24 geschwenkt, dabei werden die Blattfedern
21 nach unten durchgebogen. Dies ist insbesondere aus Fig. 4 sehr
deutlich ersichtlich. Durch diese Verschwenkung des Füllschiebers
20 kann aus einem Flachsilo abgefrästes Silagegut rasch und mühelos
in die Frontschaufel 3 des Frontladers 2 eingefüllt werden.

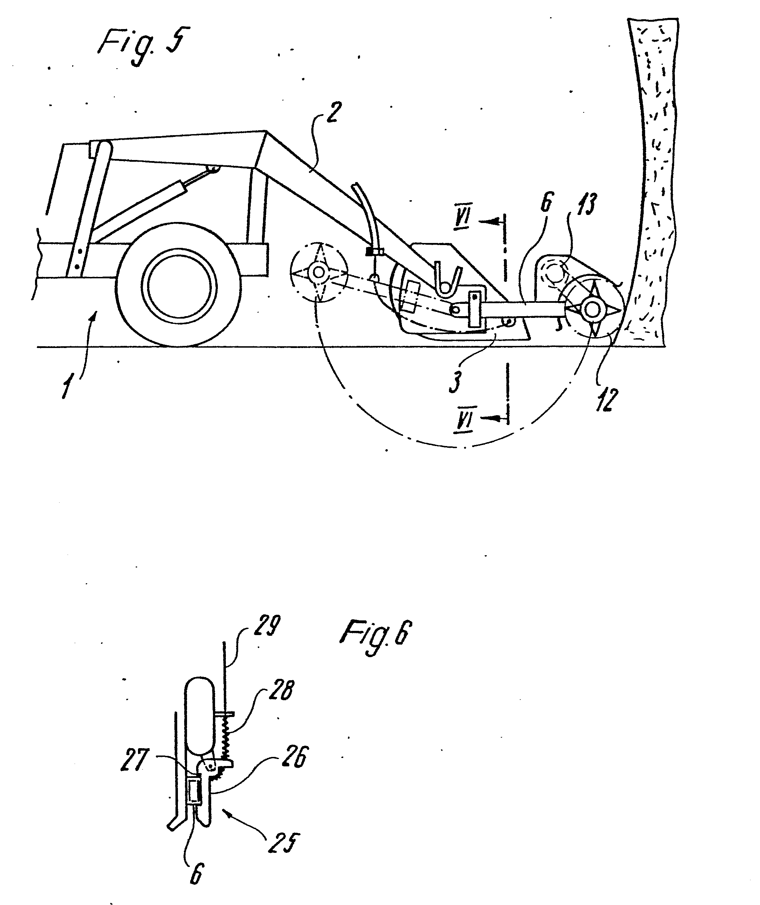

In Fig. 5 ist ein Ausführungsbeispiel der Erfindung dargestellt, bei
dem die Fräswalze 12 nach unten aus dem Arbeitsbereich der Frontschaufel 3 des Frontladers 2 wegschwenkbar ist. Beim Ausführungsbeispiel nach Fig. 5 ist die Fräswalze 12 an den schon mehrfach erwähnten Tragarmen 6 gelagert, die ihrerseits schwenkbar am Frontlader 2
angeschlossen sind. Die beiden in Fig. 5 dargestellten Endstellungen
der Tragarme 6 sind durch eine Verriegelungseinrichtung 25 fixierbar,
die in Fig. 6 dargestellt ist. Die Verriegelungseinrichtung besteht
aus einem jedem Tragarm 6 zugeordneten Verriegelungshaken 26, der
mit einer Aussparung 27 versehen ist, in die je ein Tragarm 6 formschlüssig eingreifen kann. Jeder Verriegelungshaken 26 ist quer zur
Längsachse des zugeordneten Tragarmes 6 schwenkbar und durch eine
Feder 28 in Raststellung belastet. Über einen Bowdenzug 29 kann jeder Verriegelungshaken 26 aus seiner Arretierungsstellung herausbewegt werden, so daß nunmehr die Tragarme 6 wahlweise nach vorn oder
nach hinten geschwenkt werden können.

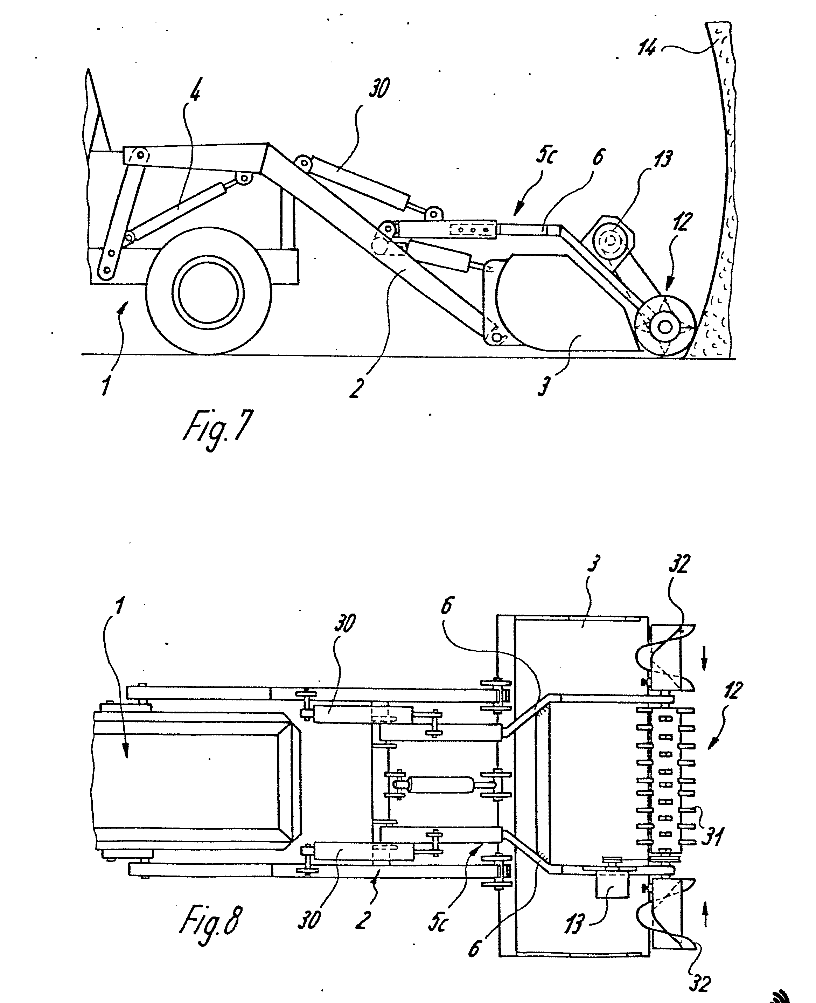

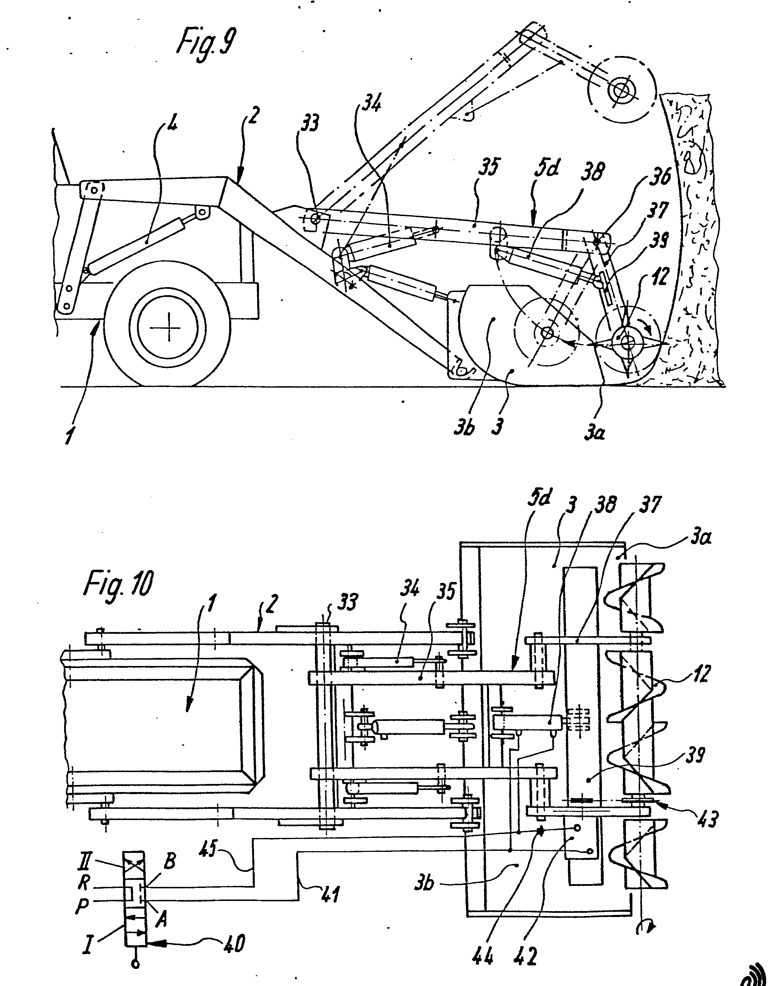

In den Fig. 7 und 8 ist ein Ausführungsbeispiel der Erfindung gezeigt, welches sich dadurch besonders auszeichnet, daß eine Anpassung der Fräswalze an verschieden große Frontlader-Typen mit einfachen baulichen Mitteln möglich ist.

An den in den Fig. 7 und 8 nur andeutungsweise gezeigten Schlepper 1 ist der Frontlader mit der Frontschaufel 3 angebaut. Der Frontlader 2 ist über Hydraulikzylinder 4 in bekannter Weise auf- und abschwenkbar.

Am Frontlader 2 ist ein Traggestell 5c angeschlossen, welches im wesentlichen aus zwei Tragarmen 6 besteht, die in Längsrichtung teleskopartig auseinanderziehbar sind.

Das Traggestell 5 c ist durch zwei Druckmedienzylinder 30, die an den Holmen des Frontladers 2 angeschlossen sind, unabhängig von der Bewegung des Frontladers 2 heb- und senkbar.

Wie aus Fig. 8 sehr deutlich hervorgeht, besteht die Fräswalze 12 aus einem Mittelteil 31 und zwei Kopfteilen 32. Das Mittelteil 31 entspricht der Breite des Traggestelltes 5c und ist deutlich kleiner als die Frontschaufel 3 breit ist. Durch die abnehmbar an das Mittelteil 31 angesetzten Kopfteile 32 wird die Fräswalze 12 in ihrer Gesamtheit auf die Breite der Frontschaufel 3 gebracht.

Die Kopfteile 32 sind vorteilhafterweise als Schneckenfräsen ausgebildet, wobei die Förderrichtungen dieser beiden Schneckenfräsen aufeinander zu weisen, wie dies durch die eingezeichneten Pfeile in Fig. 8 angedeutet ist. Dadurch wird erreicht, daß von einem Flachsilo 14 abgefrästes Gut nicht über die Seitenwandungen der Frontschaufel 3 wegfallen kann.

Das Mittelteil 31 der Fräswalze 12 wird durch einen Hydromotor 13 angetrieben, der auf einem der Tragarme 6 des Traggestell-es 5c montiert ist. Die Kopfteile 32 sind derart mit dem Mittelteil 31 verbunden, daß sie gemeinsam mit dem Mittelteil 31 angetrieben werden.

Durch die Aufteilung der Fräswalze 12 in ein Mittelteil 31 und zwei angesetzte Kopfteile 32 wird erreicht, daß durch Auswechseln der Kopfteile 32 eine Anpassung der gesamten Nutzbreite der Fräswalze 12 an unterschiedlich große Frontlader-Typen auf einfachste Art und Weise möglich ist, da lediglich mehr oder minder große Kopfteile 32 an das Mittelteil 31 angesetzt werden müssen.

Da das Traggestell 5c in Längsrichtung teleskopartig ausziehbar ist, kann in einfachste Art und Weise auch eine Anpassung in Längsrichtung erfolgen.

Ein weiteres Ausführungsbeispiel der Erfindung ist in den Fig. 9 und 10 dargestellt.

An dem in Fig. 9 andeutungsweise gezeigten Schlepper 1 ist ein Frontlader 2 mit einer Frontschaufel 3 montiert. Der Frontlader 2 ist über Hydraulikzylinder 4 in bekannter Weise auf- und abschwenkbar.

Am Frontlader 2 ist ein mehrteiliges Traggestell 5d, bestehend aus dem am Frontlader 2 am Drehpunkt 33 über einen Hydraulikzylinder 35 schwenkbar angeordneten Tragarm 35, der an dem an seinen Enden angeordneten Lagerungen 36 einen Schwenkarm 37 trägt, welcher über einen weiteren Hydraulikzylinder 38 verschwenkt werden kann.

Durch die Abstimmung der Längen von Tragarm 35 und Schwenkarm 37 derart, daß die gemeinsame Lagerung 36 etwa im Bereich oberhalb der Vorderkante 3a der Frontschaufel 3 angeordnet, ist ein Anschwenken der von dem Schwenkarm 37 getragenen Fräswalze 12 den Lade-raum 3b der Frontschaufel 3 möglich, ohne dabei den Tragarm 35 merklich anzuheben. Voraussetzung hierfür ist jedoch, daß die Länge der Fräswalze 12 kürzer ist als die lichte Weite der Frontschaufel 3. Das Einschwenken erfolgt über den Hydraulikzylinder 38.

Damit das abgefräste Futter, welches von der Fräswalze 12 durch Verschwenken der Schwenkarme 37 in den Laderaum 3b geschoben wird, nicht über die Fräswalze 12 fällt, ist an den Schwenkarmen 37 ein Schiebebrett 39 angebracht, welches sich quer über die Frontschaufel 3 erstreckt und dicht oberhalb der Fräswalze 12 angesetzt ist. Beim Einschwenken der Fräswalze 12 zum Einschieben von Futtermengen muß die während des Arbeitsvorganges rotierende Fräswalze 12 stillgesetzt werden, da anderenfalls das Futter über die Fräswalze 12 wieder aus dem Behälter entfernt würde. Das Abschalten der Fräswalze 12 erfolgt in folgender Weise:

Vom Schlepper 1 fließt Öl über den Anschluß P in ein Steuerventil 40. Bei Einschaltung der Ventilstellung I fließt Öl über die Leitung 41 zu dem Hydro-Motor 42, versetzt die Motorwelle desselben in eine Drehbewegung, wobei über einen Kettentrieb 43 die Fräswalze 12 ebenfalls in Drehung gesetzt wird. Das Öl fließt durch ein geöffnetes Sperrventil zum Anschluß B des Steuerventils 40 zurück. Um den Laderaum 3b aufzufüllen, wird die Ventilstellung II eingeschaltet. Das Öl fließt vom Anschluß B bis zu einem Sperrventil 44, da dieses den Ölstrom nur in einer Richtung durchläßt, weicht das Öl in den Hydraulikzylinder 38 aus und schwenkt die Fräswalze 12 in den Laderaum 3b. Da der Hydromotor 42 nicht mit Öl versorgt wird, steht die Fräswalze 12 still.

Das Zurückschwenken der Fräswalze 12 in die Arbeitsstellung erfolgt durch Umschalten des Steuerventiles 40 auf die Stellung I. Der Hydro-Motor 42 wird wieder in Drehung versetzt, wobei sich in der Leitung 41 ein Druck aufbaut, der den Hydraulikzylinder 38 betätigt, das entweichende Öl wird in die drucklose Leitung 45 gedrängt.

**0082313**

6/12

B. Strautmann & Söhne GmbH & Co., Bielefelder Straße,
4518 Bad Laer 1

Vorrichtung zur Entnahme von Corn-Cobmix aus
einem Flachsilo

Patentansprüche

1. Vorrichtung zur Entnahme von Corn-Cobmix aus einem Flachsilo,
bestehend aus einer um eine horizontale Achse schwenkbaren Fräswalze und einem Aufnahmebehälter, g e k e n n z e i c h n e t
durch folgende Merkmale:

a) die Vorrichtung besteht aus einem Schlepper (1) mit einem bekannten Frontlader mit Frontschaufel (3) und der am Frontlader
(2) schwenkbar angeordneten Fräswalze (12),

b) die Fräswalze (12) ist aus dem Arbeitsbereich der Frontschaufel
(3) wegschwenkbar,

c) die Fräswalze (12) ist neben ihrem Antriebsaggregat und ihrem
Traggestell (5,5a,5b,5c,5d) demontierbar am Frontlader (2) angeschlossen.

2. Vorrichtung nach Anspruch 1, dadurch gekennzeichnet, daß am
Traggestell (5b) der Fräswalze (12) ein in Richtung der Frontschaufel (3) bewegbarer Füllschieber (20) angeordnet ist.

3. Vorrichtung nach Anspruch 1 oder 2, dadurch gekennzeichnet, daß die Fräswalze (12) nebst ihrem Traggestell (5) gemeinsam mit dem Frontlader (2) auf- und abschwenkbar ist.

4. Vorrichtung nach Anspruch 1 oder 2, dadurch gekennzeichnet, daß das Traggestell (5a) der Fräswalze (12) unabhängig vom Frontlader (2) auf- und abschwenkbar ist.

5. Vorrichtung nach einem der vorhergehenden Anspruch, dadurch gekennzeichnet, daß die Fräswalze (12) am vorderen Ende zweier Tragarme (6) angeordnet ist und daß die Tragarme (6) gemeinsam mit der Fräswalze (12) nach oben aus dem Arbeitsbereich der Frontschaufel (3) wegschwenkbar sind.

6. Vorrichtung nach einem der Ansprüche 1 bis 4, dadurch gekennzeichnet, daß die Fräswalze (12) am vorderen Ende zweier Tragarme (6) befestigt und gemeinsam mit den Tragarmen (6) unterhalb der Frontschaufel (3) nach hinten aus dem Arbeitsbereich der Frontschaufel (3) wegschwenkbar ist.

7. Vorrichtung nach Anspruch 6, dadurch gekennzeichnet, daß die Tragarme (6) sowohl in Arbeitsstellung wie auch in Nichtgebrauchsstellung der Fräswalze (12) durch eine Verriegelungseinrichtung (25) arretiert sind.

8. Vorrichtung nach Anspruch 7, dadurch gekennzeichnet, daß die Verriegelungseinrichtung aus zwei Verriegelungshaken (26) besteht, die mit je einer Aussparung (27) versehen sind, in die die Tragarme (6) angreifen und die quer zur Längsachse der Tragarme (6) verschwenkbar sind.

9. Vorrichtung nach einem der vorhergehenden Ansprüche, dadurch gekennzeichnet, daß die Fräswalze (12) mittels eines Hydro-Motors (13) antreibbar ist, der am Traggestell (5,5a,5b) befestigt ist.

10. Vorrichtung nach einem der vorhergehenden Ansprüche, dadurch gekennzeichnet, daß die Fräswalze (12) aus einem der Breite des Traggestells (5c) entsprechenden Mittelteil (31) und aus zwei an die
Stirnseiten des Mittelteiles (31) abnehmbar angesetzten Kopfteilen
(32) besteht.

11. Vorrichtung nach Anspruch 1, dadurch gekennzeichnet, daß die
Kopfteile (32) als Schneckenfräsen ausgebildet sind, deren Förderrichtungen aufeinander zu weisen.

12. Vorrichtung nach Anspruch 10 oder 11, dadurch gekennzeichnet,
daß das Traggestell (5c) in Längsrichtung teleskopartig ausziehbar
ist.

13. Vorrichtung nach einem oder mehreren der vorhergehenden Ansprüche, dadurch gekennzeichnet, daß ein am Ende des abgesenkten Tragarmes (35) gelagerte, eine Fräswalze (12) tragender Schwenkarm (37)
im Bereich oberhalb der Vorderkante (3a) mit den Lagerungen (36) mit
dem Tragarm (35) schwenkbar verbunden ist, wobei sich die Fräswalze
(12) in Bodennähe ebenfalls im Bereich der Vorderkante (3a) befindet.

14. Vorrichtung nach Anspruch 13, dadurch gekennzeichnet, daß die
Länge der Fräswalze (12) kürzer ist als die lichte Weite der Frontschaufel (3).

15. Vorrichtung nach Anspruch 13 oder 14, dadurch gekennzeichnet,
daß Abzweigleitungen zum Hydraulikzylinder (38) an die Leitungen
(41,45) vom Hydro-Motor (42) zum Steuerventil (40) angeschlossen
sind und daß zwischen einem Anschlußpunkt und dem Hydromotor (42)
ein einseitig wirkendes Sperrventil (44) mit Sperrwirkung zum Hydro-
Motor (42) hin angeordnet ist.

Fig.1

Fig. 2

*13* *12*

*5a*

*15* *6*

*16* *19*

*18* *15*

*6*

*12*

*17* *13*

*2*

*3* *12*

0082313

Strautmann

Fig. 3

Fig. 4

Fig. 5

2

6   13

VI

3

VI

1   12

29   Fig. 6

28

27   26

25

6

Fig.7

Fig.8

Strautmann

Fig. 9

Fig. 10

Strautmann

0082313

Europäisches Patentamt

## EUROPÄISCHER RECHERCHENBERICHT

EP 82 11 0686

### EINSCHLÄGIGE DOKUMENTE

| Kategorie | Kennzeichnung des Dokuments mit Angabe. soweit erforderlich. der maßgeblichen Teile | Betrifft Anspruch | KLASSIFIKATION DER ANMELDUNG (Int. Cl. ³) |
|---|---|---|---|
| Y,A | GB-A-1 056 218  G. HARDER)  * Seite 1, Zeile 71 - Seite 2, Zeile 29; Figuren 1-5 * | 1,4,5, 10,14 | A 01 F 25/20 |
| Y,A | DE-A-2 607 179 (A. LIDEL) * Ansprüche 1, 8; Figur 1 * | 1,3,9 | |
| Y | DE-A-2 809 225 (W. FÄKERSPERGER) * Seite 7, Zeile 10 - Seite 10, Zeile 7, Figuren 1, 2 * | 1 | |
| A | DE-U-7 614 578 (M. TAHLER) | | |
| A | DE-A-2 809 928 (E. SCHAUMEIER) | | |

RECHERCHIERTE SACHGEBIETE (Int Cl ³)

A 01 F 25/20

Der vorliegende Recherchenbericht wurde für alle Patentansprüche erstellt

| Recherchenort | Abschlußdatum der Recherche | Prüfer |
|---|---|---|
| BERLIN | 25-01-1983 | SCHOFER G |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T · der Erfindung zugrunde liegende Theorien oder Grundsätze

E : älteres Patentdokument. das jedoch erst am oder nach dem Anmeldedatum veröffentlicht worden ist
D : in der Anmeldung angeführtes Dokument
L : aus andern Grunden angeführtes Dokument

& : Mitglied der gleichen Patentfamilie. übereinstimmendes Dokument

EPA Form 1503 03 82